(19) Europäisches Patentamt
European Patent Office
Office européen des brevets

(11) **EP 4 768 886 A1**

(12) **EUROPEAN PATENT APPLICATION**

(43) Date of publication:
**01.07.2026 Bulletin 2026/27**

(21) Application number: **25227264.6**

(22) Date of filing: **24.12.2025**

(51) International Patent Classification (IPC):
*G01N 1/28* (2006.01) *G01N 15/14* (2024.01)
*G01N 35/00* (2006.01)

(52) Cooperative Patent Classification (CPC):
**G01N 1/2813; G01N 15/1433; G01N 15/1459;
G01N 15/147;** G01N 2015/018; G01N 2015/1006;
G01N 2015/144; G01N 2035/00326

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.12.2024 CN 202411934006
01.12.2025 CN 202511794588**

(71) Applicant: **Shenzhen Mindray Bio-Medical
Electronics Co., Ltd.
Shenzhen, Guangdong 518057 (CN)**

(72) Inventors:
• **YAO, Donglan**
**Shenzhen, 518057 (CN)**
• **ZHENG, Wenbo**
**Shenzhen, 518057 (CN)**
• **YE, Bo**
**Shenzhen, 518057 (CN)**

(74) Representative: **KIPA AB**
**Drottninggatan 11**
**252 21 Helsingborg (SE)**

(54) **SAMPLE ANALYSIS SYSTEM AND PLATELET ABNORMALITY DETECTION METHOD**

(57) The disclosure relates to a sample analysis system and a platelet abnormality detection method. The sample analysis system includes: a blood cell analysis device including a sample preparation portion and a detection portion, the sample preparation portion being configured to prepare a test sample from a blood sample to be tested, and the detection portion being configured to perform a test on the test sample to obtain a first platelet test result; a smear preparation device configured to prepare a sample smear to be tested from the blood sample to be tested; a cell image acquisition device configured to image the sample smear to be tested to obtain cell images of the blood sample to be tested, and analyze the cell images to obtain a second platelet test result; and a data processing device configured to determine whether a platelet abnormality is present in the blood sample to be tested, based on the first platelet test result and the second platelet test result, and output a platelet abnormality prompt in response to determining that the platelet abnormality is present. This allows for more accurate identification of the platelet abnormality.

Figure 10

## Description

### TECHNICAL FIELD

The disclosure relates to the field of in vitro diagnostics, and in particular to a sample analysis system and a platelet abnormality detection method.

### BACKGROUND

Platelet count is of significant value in the diagnosis and treatment of thrombotic and hemorrhagic diseases. There may be platelet abnormalities in some blood samples, such as aggregation abnormalities resulting in pseudothrombocytopenia. Failure to promptly detect and correct such pseudothrombocytopenia may result in erroneous clinical decisions, such as inappropriate blood transfusion, medication errors, or surgical delays.

Existing platelet detection methods include microscopic (or cell image analysis) methods and hematology analyzer-based methods and so on. However, these methods are inadequate in identifying platelet abnormalities.

### SUMMARY

In view of this, an object of the disclosure is to provide a technical solution capable of accurately identifying platelet abnormalities, particularly platelet aggregation.

To achieve the above-mentioned object, a first aspect of the disclosure provides a sample analysis system. The sample analysis system includes:

a sample analysis device;
a smear processing device; and
a control device configured to:

control the sample analysis device to mix a portion of a blood sample to be tested and a treatment reagent to prepare a test sample, and perform a test on the test sample to obtain a first platelet test result of the blood sample to be tested;
determine whether cell image analysis is required for the blood sample to be tested, based on the first platelet test result;

if it is determined that the cell image analysis is required for the blood sample to be tested, control the smear processing device to prepare a sample smear to be tested from another portion of the blood sample to be tested, image the sample smear to be tested to obtain cell images of the blood sample to be tested, and analyze the cell images to obtain a second platelet test result of the blood sample to be tested; and
determine whether to output prompt information indicating presence of a platelet abnormality in the blood sample to be tested, based on a combined analysis of the first platelet test result and the second platelet test result, and if so, output the prompt information.

To achieve the above-mentioned object, a second aspect of the disclosure provides a platelet abnormality detection method. The method includes:

mixing a portion of a blood sample to be tested and a treatment reagent to prepare a test sample, and performing a test on the test sample to obtain a first platelet test result of the blood sample to be tested;
determining whether cell image analysis is required for the blood sample to be tested, based on the first platelet test result;
if it is determined that the cell image analysis is required for the blood sample to be tested, preparing a sample smear to be tested from another portion of the blood sample to be tested, imaging the sample smear to be tested to obtain cell images of the blood sample to be tested, and analyzing the cell images to obtain a second platelet test result of the blood sample to be tested; and
determining whether to output prompt information indicating presence of a platelet abnormality in the blood sample to be tested, based on a combined analysis of the first platelet test result and the second platelet test result, and if so, outputting the prompt information.

In the technical solutions proposed in the aspects of the disclosure, the sample smear to be tested is prepared and imaged to obtain the cell images in response to determining that the cell image analysis is required based on the platelet test result obtained from the hematology analyzer. Whether a platelet abnormality is present in the blood sample to be tested can be more accurately determined based on a combined analysis of the platelet test result obtained from the hematology analyzer and the platelet test result obtained based on the cell image analysis.

## BRIEF DESCRIPTION OF THE DRAWINGS

FIG. 1 is a schematic structural diagram of a sample analysis system according to some embodiments of the disclosure;

FIG. 2 is a schematic structural diagram of a sample analysis system according to some other embodiments of the disclosure;

FIG. 3 is a schematic diagram of a distribution of numbers of platelet aggregates for some historical samples;

FIG. 4 is a graph showing correlation between impedance method platelet count values and reference values of historical samples;

FIG. 5 illustrates absolute deviations of the impedance method platelet count values of the historical samples from the reference values of the historical samples;

FIG. 6 illustrates relative deviations of the impedance method platelet count values of the historical samples from the reference values of the historical samples;

FIG. 7 is a graph showing correlation between impedance method platelet count values and reference values of positive samples among the historical samples;

FIG. 8 illustrates absolute deviations of the impedance method platelet count values of the positive samples among the historical samples from reference values of the positive samples;

FIG. 9 illustrates relative deviations of impedance method platelet count values of the positive samples among the historical samples from reference values of the positive samples;

FIG. 10 is a schematic diagram illustrating identification of platelet aggregation according to some embodiments of the disclosure; and

FIG. 11 is a schematic flowchart of a platelet abnormality identification method according to some embodiments of the disclosure.

## DESCRIPTION OF THE PREFERRED EMBODIMENTS

The technical solutions of the embodiments of the disclosure will be described below clearly and comprehensively with reference to the accompanying drawings of the embodiments of the disclosure. Apparently, the embodiments described are merely some of, rather than all of, the embodiments of the disclosure. Based on the embodiments of the disclosure, all the other embodiments that would have been obtained by those of ordinary skill in the art without any creative efforts shall fall within the scope of protection of the disclosure.

It should be noted that the term "first/second/third" in the embodiments of the disclosure is only used to distinguish similar objects, and does not represent a specific order for the objects. It can be understood that "first/second/third" may be interchanged for specific order or chronological order when allowed.

Currently, clinical practice primarily relies on hematology analyzers to provide alerts for platelet abnormalities, such as pseudothrombocytopenia. However, when platelet aggregation occurs, two or more platelets aggregate together, and morphological characteristics of the aggregated platelets are similar to those of larger cells (such as white blood cells or red blood cells). As a result, neither voltage information obtained using the impedance method nor scattered light information or fluorescence information obtained using the optical method based on hematology analyzers can accurately distinguish aggregated platelets from cells with similar morphological characteristics, and therefore cannot provide accurate alerts.

To avoid problems caused by the inability to accurately identify pseudothrombocytopenia, manual microscopic examination is currently used to distinguish between true thrombocytopenia and pseudothrombocytopenia. For example, doctors observe platelet aggregation under a microscope to determine whether platelet aggregation has occurred. However, manual microscopic examination requires high expertise from doctors and is inefficient.

To address this, automated microscopic examination devices or automated cell image analyzers have been proposed in the related art, enabling automatic cell imaging and identification of platelet aggregates under a microscope to determine whether pseudothrombocytopenia has occurred. However, such a method is susceptible to the true platelet count, leading to inaccurate results. Therefore, doctors still need to rely on their experience to determine whether platelet aggregation has indeed occurred.

In view of this, embodiments of the disclosure propose that presence of a platelet abnormality is automatically determined by using a platelet test result obtained from an automated cell image analyzer and a platelet test result obtained from a hematology analyzer.

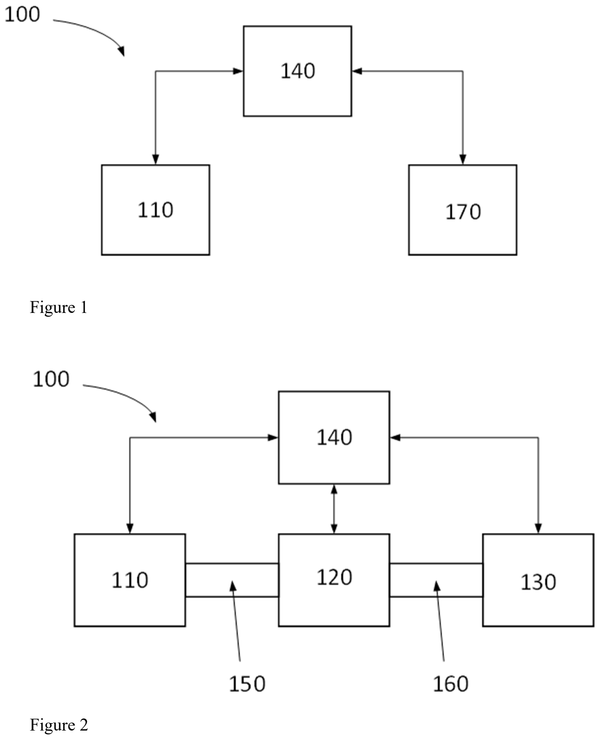

As shown in FIG. 1, an embodiment of the disclosure first proposes a sample analysis system 100, which includes a sample analysis device 110 (also referred to herein as a hematology analyzer), a smear processing device 170, and a control device 140.

In the embodiment of the disclosure, the control device 140 is configured to: control the sample analysis device 110 to mix a portion of a blood sample to be tested and a treatment reagent to prepare a test sample, and perform a test on the test sample to obtain a first platelet test result of the blood sample to be tested; determine whether cell image analysis is required for the blood sample to be tested, based on the first platelet test result; if it is determined that the cell image analysis is required for the blood sample to be tested, control the smear processing device 170 to prepare a sample smear to be tested from another portion of the blood sample to be tested, image the sample smear to be tested to obtain cell images of the blood sample to be tested, and analyze the cell images to obtain a second platelet test result of the blood sample to be tested; and determine whether to output prompt information indicating presence of a platelet abnormality in the blood sample to be tested, based on a combined analysis of the first platelet test result and the second platelet test result, and if so, output the prompt information.

For example, the control device 140 is configured to determine whether a platelet abnormality is present in the blood sample to be tested, based on the first platelet test result and the second platelet test result, and output a platelet abnormality prompt in response to determining that the platelet abnormality is present in the blood sample to be tested.

The technical solution provided by the embodiment of the disclosure can accurately determine whether a platelet abnormality, for example, including platelet aggregation, particularly platelet aggregation that causes pseudothrombocytopenia, is present in the blood sample to be tested, eliminating the interference from the true platelet count to the platelet test result obtained based on the cell image analysis method, thereby enabling more accurate identification of samples with platelet abnormalities.

In the embodiment of the disclosure, the sample analysis device 110 is configured to classify and count cells in the blood sample to be tested. For example, the sample analysis device 110 is configured to perform a complete blood count test on the blood sample to be tested to obtain test results of complete blood count parameters. The complete blood count parameters include at least one of the following parameters: WBC, RBC, PLT, HGB, MCV, RDWCV, MCH, FRC%, NEU%, LYM%, MON%, EOS%, BASO%, EU#, LYM#, MON#, EOS#, BASO#, NRBC%, NRBC#, IMG%, IMG#, HFC%, HFC#, blast cell alert, platelet aggregation alert, platelet histogram abnormality alert, red blood cell agglutination alert, red blood cell histogram abnormality alert, red blood cell bimodality alert, and hemolysis-resistant red blood cell alert.

In some embodiments, the sample analysis device 110 includes a sample preparation portion and a detection portion. The sample preparation portion is configured to mix the portion of the blood sample to be tested and the treatment reagent to prepare the test sample. The detection portion is configured to perform the test on the prepared test sample to obtain the first platelet test result of the blood sample to be tested. That is, the control device 140 configured to control the sample analysis device 110 to mix a portion of the blood sample to be tested and a treatment reagent to prepare a test sample, and perform a test on the test sample to obtain a first platelet test result of the blood sample to be tested, may include: the control device 140 configured to: control the sample preparation portion to mix the portion of the blood sample to be tested and the treatment reagent to prepare the test sample; and control the sample detection portion to perform the test on the test sample to obtain the first platelet test result of the blood sample to be tested.

In some embodiments, the control device 140 configured to control the sample analysis device 110 to mix a portion of the blood sample to be tested and a treatment reagent to prepare a test sample, and perform a test on the test sample to obtain a first platelet test result of the blood sample to be tested, may include: the control device 140 configured to: control the sample analysis device 110 to mix the portion of the blood sample to be tested and a diluent as the treatment reagent to prepare the test sample, and perform the test on the test sample using an impedance method to obtain a first platelet count value of the blood sample to be tested as the first platelet test result. For example, the sample preparation portion may be configured to mix the portion of the blood sample to be tested and the diluent as the treatment reagent to prepare the test sample. Correspondingly, the detection portion may be configured to perform the test on the test sample using the impedance method to obtain the first platelet count value of the blood sample to be tested as the first platelet test result. Herein, the first platelet count value obtained based on the impedance method is also referred to as an impedance method platelet count value below.

For example, the sample preparation portion is configured to mix the portion of the blood sample to be tested and the diluent in a first reaction cell to prepare a first test sample. The detection portion includes an impedance method detection unit. The impedance method detection unit includes a counting cell and a detection component, wherein the counting cell is configured to allow for passage of the first test sample, and the detection component is configured to obtain electronic signals, such as voltage signals when the first test sample passes through the counting cell, to obtain the first platelet count value of the blood sample to be tested based on the electronic signals.

In some alternative or additional embodiments, the control device 140 configured to control the sample analysis device 110 to mix a portion of the blood sample to be tested and a treatment reagent to prepare a test sample, and perform a test on the test sample to obtain a first platelet test result of the blood sample to be tested, may include: the control device 140 configured to: control the sample analysis device 110 to mix the portion of the blood sample to be tested and a fluorescent reagent as the treatment reagent to prepare the test sample, and perform the test on the test sample using an optical method to obtain a first platelet count value of the blood sample to be tested as the first platelet test result. For example, the sample preparation portion may be configured to mix the portion of the blood sample to be tested and the fluorescent reagent as the treatment reagent to prepare the test sample. Correspondingly, the detection portion may be configured to perform the test on the test sample using the optical method to obtain the first platelet count value of the blood sample to be tested as the first platelet test result. Herein, the first platelet count value obtained based on the optical method is also referred to as an optical method platelet count value below.

For example, the sample preparation portion is configured to mix the portion of the blood sample to be tested and the fluorescent reagent in a second reaction cell to prepare a second test sample. The detection portion includes an optical detection unit. The optical detection unit includes a flow cell, a light source, and an optical detector. The flow cell is configured to allow for passage of the second test sample, the light source is configured to irradiate the second test sample passing through the flow cell with light, and the optical detector is configured to detect optical signals generated when the second test sample passes through the flow cell under the irradiation with light. The optical signals include scattered light signals and/or fluorescence signals.

In some embodiments, as shown in FIG. 2, the smear processing device 170 may include a smear preparation device 120 and a cell image acquisition device 130 (or a cell image analyzer). The smear preparation device 120 is configured to prepare the sample smear to be tested from the another portion of the blood sample to be tested, for example, by smearing the another portion of the blood sample to be tested onto a slide in a smearing direction to form a blood film. The cell image acquisition device 130 is configured to image the sample smear to be tested to obtain the cell images of the blood sample to be tested, and analyze the cell images to obtain the second platelet test result of the blood sample to be tested. That is, the control device 140 configured to control the smear processing device 170 to prepare a sample smear to be tested from the another portion of the blood sample to be tested, image the sample smear to be tested to obtain cell images of the blood sample to be tested, and analyze the cell images to obtain a second platelet test result of the blood sample to be tested, may include: the control device 140 configured to: control the smear preparation device 120 to prepare the sample smear to be tested from the another portion of the blood sample to be tested; and control the cell image acquisition device 130 to image the sample smear to be tested to obtain the cell images of the blood sample to be tested, and analyze the cell images to obtain the second platelet test result of the blood sample to be tested.

For example, the control device 140 configured to analyze the cell images to obtain a second platelet test result of the blood sample to be tested, may include: the control device 140 configured to: identify platelet aggregates in the cell images, and obtain the second platelet test result based on a number and/or a size of the platelet aggregates. It is preferable herein that the second platelet test result is the number of the platelet aggregates.

In some embodiments, the cell image acquisition device 130 may include a microscopic optical module configured to capture the cell images of the blood film on the sample smear to be tested. The microscopic optical module includes a lens group and a camera. The lens group may include a first objective lens and a second objective lens, wherein the first objective lens may be, for example, a 10x objective lens or a 40x objective lens, and the second objective lens may be, for example, a 40x objective lens or a 100x objective lens.

Further, as shown in FIG. 2, the sample analysis system 100 further includes a first transport device 150 and the smear preparation device 120. The first transport device 150 is configured to transport the blood sample to be tested from the blood cell analysis device 110 to the smear preparation device 120. The second transport device 160 is configured to transport the sample smear to be tested from the smear preparation device 120 to the cell image acquisition device 130.

In some embodiments, the control device 140 may include a first control portion and a second control portion. The first control portion is configured to control the sample analysis device 110, and the second control portion is configured to control the smear processing device 170.

In some examples, the first control portion may be integrated into a controller of the sample analysis device 110, and the second control portion may be integrated into a controller of the smear processing device 170.

Further, the second control portion may include a first controller configured to control the smear preparation device 120 and a second controller configured to control the cell image acquisition device 130.

In some embodiments, the control device 140 may further include a data processing portion configured to implement the steps of: determining whether cell image analysis is required for the blood sample to be tested, based on the first platelet test result; and determining whether to output prompt information indicating presence of a platelet abnormality in the blood sample to be tested, based on a combined analysis of the first platelet test result and the second platelet test result, and if so, outputting the prompt information.

Herein, the data processing portion may be communicatively connected to the first control portion and the second control portion, to send instructions to the first control portion and the second control portion for controlling the sample analysis device 110 and the smear processing device 170.

In some embodiments, the data processing portion may be integrated into one of the blood cell analysis device 110, the smear preparation device 120, or the cell image acquisition device 130.

In some other embodiments, the data processing portion may alternatively be configured as a processor or middleware independent of the blood cell analysis device 110, the smear preparation device 120, and the cell image acquisition device 130. For example, the data processing portion may be installed as middleware on a computer in signal connection with the cell analysis device 110 and the cell image acquisition device 130.

In some embodiments, the control device 140, or the first control portion and the second control portion, may include a processor and a memory. The processor may be a CPU, a GPU, or other chips having a computing capability. The memory contains various computer programs executable by the processor, such as an operating system and an application program, and data required for the execution of the computer programs.

In some embodiments, the control device 140 may be implemented as software or hardware. For example, the control device 140 may be stored in form of software in a memory of the blood cell analysis device 110, the smear preparation device 120, or the cell image acquisition device 130. Alternatively, the control device 140 may be integrated in form of hardware into a processor of the blood cell analysis device 110, the smear preparation device 120, or the cell image acquisition device 130.

In some embodiments, the aforementioned platelet abnormality may include platelet aggregation, particularly platelet aggregation that causes pseudothrombocytopenia.

In some embodiments, the sample analysis system 100 may further include a display device not shown. Correspondingly, the control device 140 configured to output the prompt information may include: the control device 140 configured to output the prompt information to the display device. The display device displays the prompt information, i.e., the platelet abnormality prompt, such as a platelet aggregation prompt, via a display interface.

As mentioned above, in the related art, whether pseudothrombocytopenia is present is determined based on platelet aggregates obtained from the cell image acquisition device 130. However, such a method is susceptible to the true platelet count, resulting in inaccurate abnormality identification.

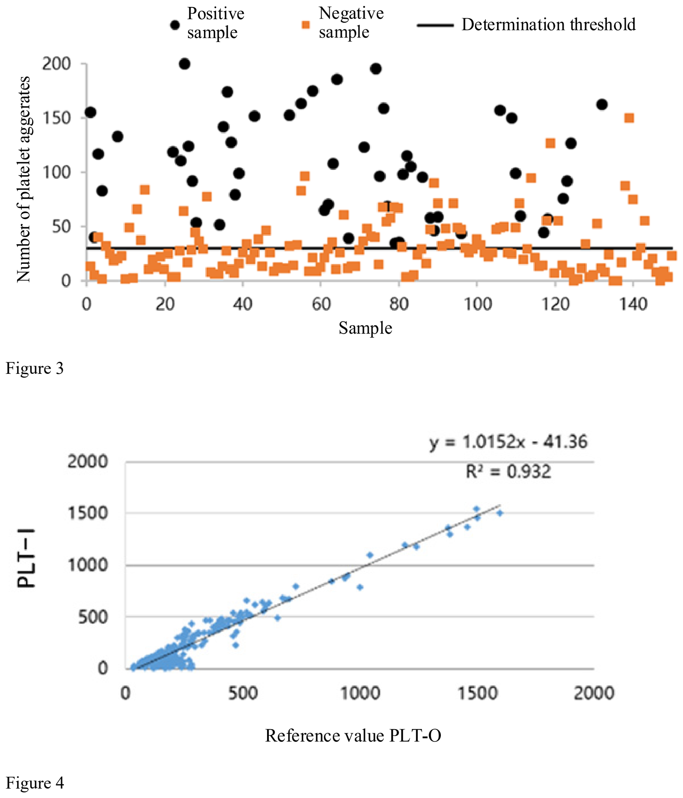

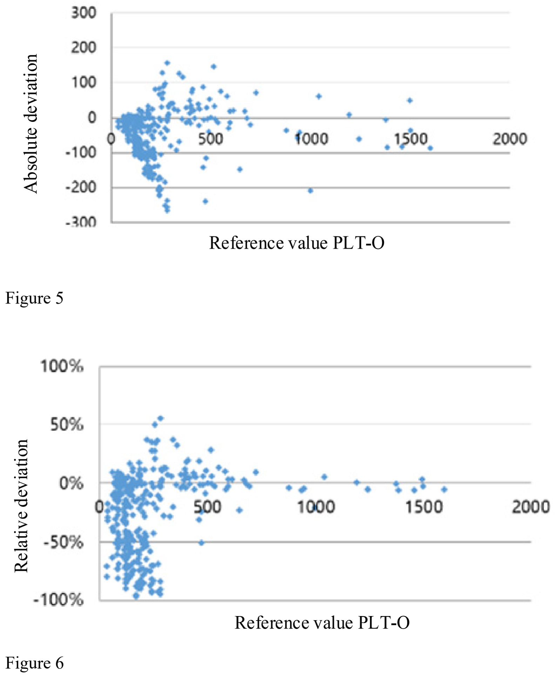

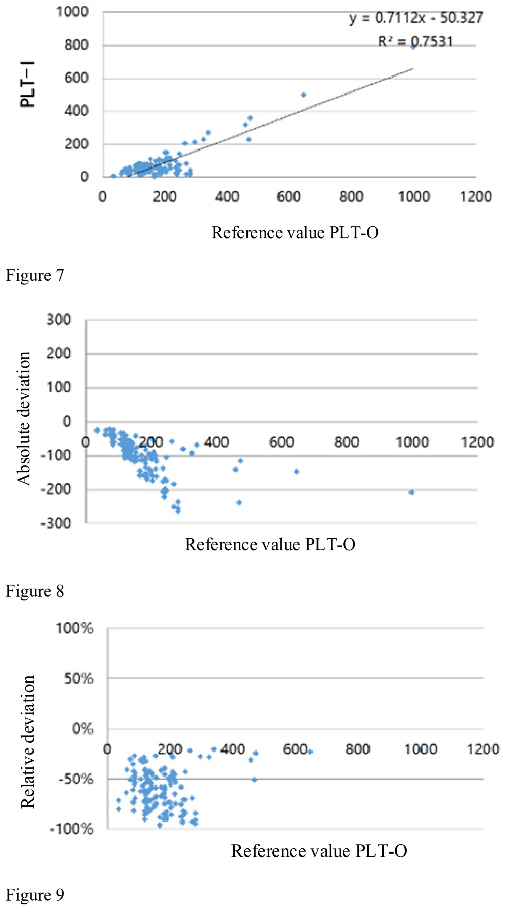

Specifically, fresh blood samples from 337 patients were collected. These blood samples were tested on a BC-6800Plus hematology analyzer produced by Shenzhen Mindray Bio-Medical Electronics Co., Ltd., to obtain impedance method platelet count values PLT-I of these blood samples. Meanwhile, blood smears prepared from these blood samples were imaged by using an MC-80 cell morphology analyzer from Mindray, to obtain numbers of platelet aggregates for these blood samples, as shown in FIG. 3. Furthermore, venous blood was re-collected from the 337 patients using sodium citrate anticoagulant tubes, and these re-collected blood samples were then subjected to an optical platelet test by using the BC-6800Plus hematology analyzer from Mindray, to obtain respective optical method platelet count values PLT_O as reference values. In addition, manual microscopic examination was performed to confirm whether platelet aggregation that could cause pseudothrombocytopenia was present in each of the 337 blood samples under the microscope. Herein, the correlation and deviations between PLT-I and the reference values PLT_O of blood samples of the 337 patients were calculated, as shown in FIGs. 4 to 6. Samples, with absolute deviations less than -20 and relative deviations less than -20% and with presence of platelet aggregation confirmed by the manual microscopic examination, were determined as platelet aggregation positive samples, and thus 140 positive samples, i.e., blood samples with platelet aggregation, and 197 negative samples, i.e., blood samples without platelet aggregation were obtained. FIGs. 7 to 9 illustrate the correlation and deviations between the impedance method platelet count values PLT-I and the reference values PLT_O of these 140 positive samples. It can be seen that the PLT-I of the platelet aggregation positive samples exhibits pseudothrombocytopenia.

In addition, as shown in FIG. 3, the number of platelet aggregates is generally higher for a platelet aggregation positive sample, but lower for a platelet aggregation negative sample. Therefore, the number of platelet aggregates may be used to determine whether platelet aggregation is present. Using the number of platelet aggregates being greater than 30 (a determination threshold) as a criterion for determining platelet aggregation positive samples, the performance of determining whether platelet aggregation is present based only on the number of platelet aggregates is obtained, as shown in Table 1.

Table 1. Performance of identifying platelet aggregation samples using only the number of platelet aggregates

| Number of samples | True positive (TP) | False negative (FN) | False positive (FP) | True negative (TN) |
|---|---|---|---|---|
| 337 | 133 | 7 | 32 | 165 |
| Percentage | 95.0% | 5.0% | 16.2% | 83.8% |

As can be seen from Table 1, there is a high false positive rate for the method of identifying platelet aggregation samples using only the number of platelet aggregates. This is because there are a large number of negative samples each with a number of platelet aggregates greater than 30. These negative samples each have a high number of platelet aggregates under microscope due to their high impedance method platelet count values PLT-I. However, such platelet aggregates are not caused by platelet aggregation, and the impedance method platelet count values PLT-I of such negative samples do not exhibit pseudothrombocytopenia.

In view of this, in some embodiments, it is proposed to determine a determination threshold for the second platelet test result based on the first platelet test result.

Specifically, the control device 140 configured to determine whether to output prompt information indicating presence of a platelet abnormality in the blood sample to be tested, based on a combined analysis of the first platelet test result and the second platelet test result, may include: the control device 140 configured to: determine a determination threshold based on the first platelet test result, and when the second platelet test result is greater than the determination threshold, determine that a platelet abnormality, particularly platelet aggregation that causes pseudothrombocytopenia, is present in the blood sample to be tested, and thus determine to output the prompt information.

It is preferable herein that the first platelet test result is a platelet count value, and the second platelet test result is a number of platelet aggregates.

In particular, when the first platelet test result is larger, a larger determination threshold is selected.

In some embodiments, the determination threshold may be a piecewise linear function of the first platelet test result. For example, the control device 140 configured to determine a determination threshold based on the first platelet test result includes: the control device 140 configured to calculate the determination threshold by using the following formula:

$$L(x) = \begin{cases} a, & x < c \\ b * x, & x \geq c \end{cases}$$

where L(x) is the determination threshold, x is the first platelet test result, and a, b, and c are constants. If the second platelet test result is greater than L(x), the sample is considered to be an aggregation sample, and if the second platelet test result is less than L(x), the sample is not considered to be an aggregation sample.

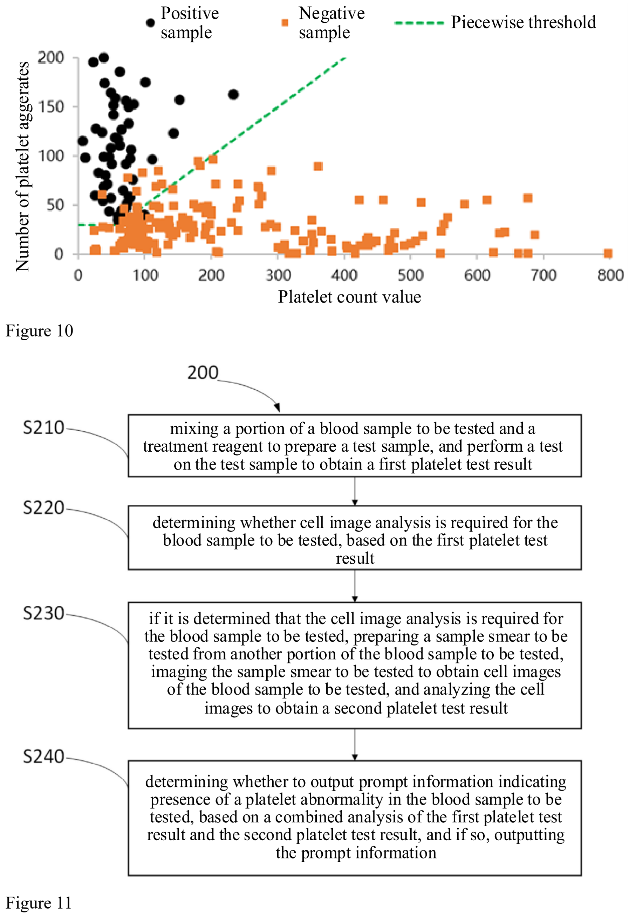

In a specific example, a=30, b=0.5, and c=60. Taking the aforementioned 337 samples as an example, the performance of determining whether platelet aggregation is present by using the method according to the embodiments of the disclosure is statistically analyzed, as shown in Table 2 and FIG. 10. As can be seen from Table 2, compared to the method in the related art that determines whether platelet aggregation is present by using the second platelet test result and a fixed threshold (also referred to as a fixed threshold method), the method according to the embodiments of the disclosure, which determines the determination threshold based on the first platelet test result and the piecewise linear function (also referred to as a piecewise threshold method), has a significantly reduced false positive rate and false negative rate, and a significantly increased specificity.

Table 2. Performance of identifying platelet aggregation by using the fixed threshold method and the piecewise threshold method

| Method | Sensitivity | Specificity | False negative rate | False positive rate |
|---|---|---|---|---|
| Fixed threshold method | 95.0% | 83.8% | 5.0% | 16.2% |
| Piecewise threshold method | 99.3% | 94.4% | 0.7% | 5.6% |

In some other alternative embodiments, a machine learning method may also be used to determine whether a platelet abnormality is present. That is, the control device 140 configured to determine whether to output prompt information indicating presence of a platelet abnormality in the blood sample to be tested, based on a combined analysis of the first platelet test result and the second platelet test result, may include: the control device 140 configured to input the first platelet test result and the second platelet test result into a machine learning model; and determine whether to output the prompt information based on an output of the machine learning model. That is, it is determined whether a platelet abnormality is present in the blood sample to be tested, and thus whether to output the prompt information, based on the output of the machine learning model.

As some implementations, a platelet count value as the first platelet test result and a number of platelet aggregates as the second platelet test result are inputted into the machine learning model, to obtain the output based on the machine learning model as the result of whether platelet aggregation is present in the blood sample to be tested. For example, the output of the machine learning model may include presence of platelet aggregation (e.g., represented by 1) and absence of platelet aggregation (e.g., represented by 0).

It can be understood herein that the machine learning model is trained by using first platelet test results and second platelet test results of historical samples. For example, each historical sample is automatically classified, by using the machine learning method, as a positive sample with platelet aggregation or a negative sample without platelet aggregation. These historical samples are used to train the machine learning model after being labeled as positive samples or negative samples.

In a specific example, the machine learning model is built based on a decision tree. For example, rules for determining whether platelet aggregation is present are automatically generated based on the decision tree.

Taking the aforementioned 337 samples as an example, the performance of determining whether platelet aggregation is present by using the method according to the embodiments of the disclosure, which generates rules based on the decision tree (also referred to as a decision tree method), is statistically analyzed, as shown in Table 3. As can be seen from Table 3, compared to the fixed threshold method, the decision tree method according to the embodiments of the disclosure has a significantly reduced false positive rate and false negative rate, and a significantly increased specificity.

Table 3. Performance of identifying platelet aggregation by using the fixed threshold method and the decision tree method

| Method | Sensitivity | Specificity | False negative | False positive |
|---|---|---|---|---|
| Fixed threshold method | 95.0% | 83.8% | 5.0% | 16.2% |
| Decision tree method | 96.4% | 94.4% | 3.6% | 5.6% |

An embodiment of the disclosure further provides a platelet abnormality detection method 200. As shown in FIG. 11, the method 200 includes steps S210 to S240. The method 200 is particularly implemented by the sample analysis system 100 according to any one of the above-described embodiments.

In step S210, a portion of a blood sample to be tested and a treatment reagent are mixed to prepare a test sample, and a test is performed on the test sample to obtain a first platelet test result of the blood sample to be tested. Step S210 is particularly implemented by the sample analysis device 110 of the sample analysis system 100.

The first platelet test result is, for example, a platelet count value.

As some implementations, in step S210, the portion of the blood sample to be tested and a diluent may be mixed to prepare the test sample, and the test may be performed on the test sample using an impedance method to obtain a first platelet count value of the blood sample to be tested as the first platelet test result.

As some other implementations, in step S210, the portion of the blood sample to be tested and a fluorescent reagent may be mixed to prepare the test sample, and the test may be performed on the test sample using an optical method to obtain a first platelet count value of the blood sample to be tested as the first platelet test result.

In step S220, it is determined whether cell image analysis is required for the blood sample to be tested, based on the first platelet test result.

In step S230, if it is determined that the cell image analysis is required for the blood sample to be tested, a sample smear to be tested is prepared from another portion of the blood sample to be tested, the sample smear to be tested is imaged to obtain cell images of the blood sample to be tested, and the cell images are analyzed to obtain a second platelet test result of the blood sample to be tested.

In some embodiments, preparing a sample smear to be tested from another portion of the blood sample to be tested may include: preparing the sample smear to be tested by dropping the another portion of the blood sample to be tested onto a clean slide and spreading the dropped blood sample on the slide into a blood film, so as to prepare the sample smear to be tested. This step is particularly implemented by the smear preparation device 120 of the sample analysis system 100.

In some embodiments, the sample smear to be tested is imaged by the cell image acquisition device 130 of the sample analysis system 100, to obtain the cell images of the blood sample to be tested and analyze the cell images.

In step S240, it is determined whether to output prompt information indicating presence of a platelet abnormality in the blood sample to be tested, based on a combined analysis of the first platelet test result and the second platelet test result, and if so, the prompt information is outputted. For example, it is determined whether a platelet abnormality is present in the blood sample to be tested, based on the first platelet test result and the second platelet test result, and a platelet abnormality prompt is outputted in response to determining that the platelet abnormality is present in the blood sample to be tested. Step S240 is particularly implemented by the control device 140 of the sample analysis system 100.

In some embodiments, the platelet abnormality includes platelet aggregation, particularly platelet aggregation that causes pseudothrombocytopenia.

In some embodiments, outputting the prompt information may include: outputting the prompt information to a display device for display.

In some embodiments, in step S230, analyzing the cell images to obtain a second platelet test result of the blood sample to be tested may include: identifying platelet aggregates in the cell images; and obtaining the second platelet test result based on a number and/or a size of the platelet aggregates.

It is preferable herein that the second platelet test result is the number of the platelet aggregates.

In some embodiments, determining whether to output prompt information indicating presence of a platelet abnormality in the blood sample to be tested, based on a combined analysis of the first platelet test result and the second platelet test result, may include: determining a determination threshold based on the first platelet test result, and when the second platelet test result is greater than the determination threshold, determining that the platelet abnormality is present in the blood sample to be tested, and thus determining to output the prompt information.

It is preferable herein that the first platelet test result is a platelet count value, and the second platelet test result is a number of platelet aggregates.

Further, determining a determination threshold based on the first platelet test result may include: calculating the determination threshold by using the following formula:

$$ L(x) = \begin{cases} a, & x < c \\ b * x, & x \geq c \end{cases} $$

where L(x) is the determination threshold, x is the first platelet test result, and a, b, and c are constants.

In some other embodiments, in step S240, determining whether to output prompt information indicating presence of the platelet abnormality in the blood sample to be tested, based on a combined analysis of the first platelet test result and the second platelet test result, may include: inputting the first platelet test result and the second platelet test result into a machine learning model; and determining whether the platelet abnormality is present in the blood sample to be tested, and thus whether to output the prompt information, based on an output of the machine learning model.

In some examples, the machine learning model may be trained by using first platelet test results and second platelet test results of historical samples.

For example, the machine learning model is trained by using historical samples, wherein each of said historical samples is classified, by using a machine learning method, as a positive sample with platelet aggregation or a negative sample without platelet aggregation, and is correspondingly labeled as the positive sample or the negative sample.

Preferably, the machine learning model is built based on a decision tree.

The features or combinations thereof mentioned above in the description, accompanying drawings, and claims may be combined with each other arbitrarily or used separately as long as they are meaningful within the scope of the disclosure and do not contradict each other.

The foregoing description merely relates to the preferred embodiments of the disclosure, and is not intended to limit the scope of patent protection of the disclosure. Any equivalent variations made by using the content of the description and the accompanying drawings of the disclosure from the concept of the disclosure, or the direct/indirect applications of the contents in other related technical fields shall fall within the scope of patent protection of the disclosure.

**EXAMPLES**

1. A sample analysis system, comprising:

a sample analysis device;
a smear processing device; and
a control device configured to:

control the sample analysis device to mix a portion of a blood sample to be tested and a treatment reagent to prepare a test sample, and perform a test on the test sample to obtain a first platelet test result of the blood sample to be tested;
determine whether cell image analysis is required for the blood sample to be tested, based on the first platelet test result;
if it is determined that the cell image analysis is required for the blood sample to be tested, control the smear processing device to prepare a sample smear to be tested from another portion of the blood sample to be tested, image the sample smear to be tested to obtain cell images of the blood sample to be tested, and analyze the cell images to obtain a second platelet test result of the blood sample to be tested; and
determine whether to output prompt information indicating presence of a platelet abnormality in the blood sample to be tested, based on a combined analysis of the first platelet test result and the second platelet test result, and if so, output the prompt information.

2. The sample analysis system of example 1, wherein the sample analysis device comprises a sample preparation portion and a sample detection portion; and
the control device configured to control the sample analysis device to mix a portion of a blood sample to be tested and a treatment reagent to prepare a test sample, and perform a test on the test sample to obtain a first platelet test result of the blood sample to be tested, comprises: the control device configured to:

control the sample preparation portion to mix the portion of the blood sample to be tested and the treatment reagent to prepare the test sample; and
control the sample detection portion to perform the test on the test sample to obtain the first platelet test result of the blood sample to be tested.

3. The sample analysis system of example 1 or 2, wherein the smear processing device comprises a smear preparation device and a cell image acquisition device; and
the control device configured to control the smear processing device to prepare a sample smear to be tested from another portion of the blood sample to be tested, image the sample smear to be tested to obtain cell images of the blood sample to be tested, and analyze the cell images to obtain a second platelet test result of the blood sample to be tested, comprises: the control device configured to:

control the smear preparation device to prepare the sample smear to be tested from the another portion of the blood sample to be tested; and
control the cell image acquisition device to image the sample smear to be tested to obtain the cell images of the blood sample to be tested and analyze the cell images to obtain the second platelet test result of the blood sample to be tested.

4. The sample analysis system of any one of examples 1 to 3, wherein the control device comprises a first control portion and a second control portion, the first control portion being configured to control the sample analysis device, and the second control portion being configured to control the smear processing device.

5. The sample analysis system of any one of examples 1 to 4, wherein the platelet abnormality comprises platelet aggregation.

6. The sample analysis system of any one of examples 1 to 5, further comprising a display device, wherein
the control device configured to output the prompt information comprises: the control device configured to output the prompt information to the display device.

7. The sample analysis system of any one of examples 1 to 6, wherein the control device configured to control the sample analysis device to mix a portion of a blood sample to be tested and a treatment reagent to prepare a test sample, and perform a test on the test sample to obtain a first platelet test result of the blood sample to be tested, comprises: the control device configured to:

control the sample analysis device to mix the portion of the blood sample to be tested and a diluent as the treatment reagent to prepare the test sample, and perform the test on the test sample using an impedance method to obtain a first platelet count value of the blood sample to be tested as the first platelet test result; or
control the sample analysis device to mix the portion of the blood sample to be tested and a fluorescent reagent as the treatment reagent to prepare the test sample, and perform the test on the test sample using an optical method to obtain a first platelet count value of the blood sample to be tested as the first platelet test result.

8. The sample analysis system of any one of examples 1 to 7, wherein the control device configured to analyze the cell images to obtain a second platelet test result of the blood sample to be tested comprises: the control device configured to:

identify platelet aggregates in the cell images; and
obtain the second platelet test result based on a number and/or a size of the platelet aggregates, wherein preferably, the second platelet test result is the number of the platelet aggregates.

9. The sample analysis system of any one of examples 1 to 8, wherein the control device configured to determine whether to output prompt information indicating presence of a platelet abnormality in the blood sample to be tested, based on a combined analysis of the first platelet test result and the second platelet test result, comprises: the control device configured to:

determine a determination threshold based on the first platelet test result, and

determine to output the prompt information when the second platelet test result is greater than the determination threshold.

10. The sample analysis system of example 9, wherein the first platelet test result is a platelet count value, and the second platelet test result is a number of platelet aggregates.

11. The sample analysis system of example 9 or 10, wherein the control device configured to determine a determination threshold based on the first platelet test result comprises: the control device configured to calculate the determination threshold by using the following formula:

$$L(x) = \begin{cases} a, & x < c \\ b * x, & x \geq c \end{cases}$$

wherein L(x) is the determination threshold, x is the first platelet test result, and a, b, and c are constants.

12. The sample analysis system of any one of examples 1 to 8, wherein the control device configured to determine whether to output prompt information indicating presence of a platelet abnormality in the blood sample to be tested, based on a combined analysis of the first platelet test result and the second platelet test result, comprises: the control device configured to:

input the first platelet test result and the second platelet test result into a machine learning model; and determine whether to output the prompt information based on an output of the machine learning model.

13. The sample analysis system of example 12, wherein the machine learning model is trained by using first platelet test results and second platelet test results of historical samples;

preferably, the machine learning model is trained by using historical samples, wherein each of said historical samples is classified, by using a machine learning method, as a positive sample with platelet aggregation or a negative sample without platelet aggregation, and is correspondingly labeled as the positive sample or the negative sample; and preferably, the machine learning model is built based on a decision tree.

14. A platelet abnormality detection method, comprising:

mixing a portion of a blood sample to be tested and a treatment reagent to prepare a test sample, and performing a test on the test sample to obtain a first platelet test result of the blood sample to be tested; determining whether cell image analysis is required for the blood sample to be tested, based on the first platelet test result; if it is determined that the cell image analysis is required for the blood sample to be tested, preparing a sample smear to be tested from another portion of the blood sample to be tested, imaging the sample smear to be tested to obtain cell images of the blood sample to be tested, and analyzing the cell images to obtain a second platelet test result of the blood sample to be tested; and determining whether to output prompt information indicating presence of a platelet abnormality in the blood sample to be tested, based on a combined analysis of the first platelet test result and the second platelet test result, and if so, outputting the prompt information.

15. The method of example 14, wherein the platelet abnormality comprises platelet aggregation.

16. The method of example 14 or 15, wherein outputting the prompt information comprises:
outputting the prompt information to a display device for display.

17. The method of any one of examples 14 to 16, wherein mixing a portion of a blood sample to be tested and a treatment reagent to prepare a test sample, and performing a test on the test sample to obtain a first platelet test result of the blood sample to be tested, comprise:

mixing the portion of the blood sample to be tested and a diluent as the treatment reagent to prepare the test sample, and performing the test on the test sample using an impedance method to obtain a first platelet count value of the blood sample to be tested as the first platelet test result; or

mixing the portion of the blood sample to be tested and a fluorescent reagent as the treatment reagent to prepare the test sample, and performing the test on the test sample using an optical method to obtain a first platelet count value of the blood sample to be tested as the first platelet test result.

18. The method of any one of examples 14 to 17, wherein analyzing cell images to obtain a second platelet test result of the blood sample to be tested comprises:

identifying platelet aggregates in the cell images; and

obtaining the second platelet test result based on a number and/or a size of the platelet aggregates, wherein preferably, the second platelet test result is the number of the platelet aggregates.

19. The method of any one of examples 14 to 18, wherein determining whether to output prompt information indicating presence of a platelet abnormality in the blood sample to be tested, based on a combined analysis of the first platelet test result and the second platelet test result, comprises:

determining a determination threshold based on the first platelet test result, and

determining to output the prompt information when the second platelet test result is greater than the determination threshold.

20. The method of example 19, wherein the first platelet test result is a platelet count value, and the second platelet test result is a number of platelet aggregates.

21. The method of example 19 or 20, wherein determining a determination threshold based on the first platelet test result comprises: calculating the determination threshold by using the following formula:

$$L(x) = \begin{cases} a, & x < c \\ b * x, & x \geq c \end{cases}$$

wherein L(x) is the determination threshold, x is the first platelet test result, and a, b, and c are constants.

22. The method of any one of examples 14 to 18, wherein determining whether to output prompt information indicating presence of a platelet abnormality in the blood sample to be tested, based on a combined analysis of the first platelet test result and the second platelet test result, comprises:

inputting the first platelet test result and the second platelet test result into a machine learning model; and

determining whether to output the prompt information based on an output of the machine learning model.

23. The method of example 22, wherein the machine learning model is trained by using first platelet test results and second platelet test results of historical samples;

preferably, the machine learning model is trained by using historical samples, wherein each of said historical samples is classified, by using a machine learning method, as a positive sample with platelet aggregation or a negative sample without platelet aggregation, and is correspondingly labeled as the positive sample or the negative sample; and

preferably, the machine learning model is built based on a decision tree.

## Claims

1. A sample analysis system, comprising:

a sample analysis device;
a smear processing device; and
a control device configured to:

control the sample analysis device to mix a portion of a blood sample to be tested and a treatment reagent to prepare a test sample, and perform a test on the test sample to obtain a first platelet test result of the blood sample to be tested;

determine whether cell image analysis is required for the blood sample to be tested, based on the first platelet test result;

if it is determined that the cell image analysis is required for the blood sample to be tested, control the smear processing device to prepare a sample smear to be tested from another portion of the blood sample to be tested, image the sample smear to be tested to obtain cell images of the blood sample to be tested, and analyze the cell images to obtain a second platelet test result of the blood sample to be tested; and

determine whether to output prompt information indicating presence of a platelet abnormality in the blood sample to be tested, based on a combined analysis of the first platelet test result and the second platelet test result, and if so, output the prompt information.

2.  The sample analysis system of claim 1, wherein the sample analysis device comprises a sample preparation portion and a sample detection portion; and

    the control device configured to control the sample analysis device to mix a portion of a blood sample to be tested and a treatment reagent to prepare a test sample, and perform a test on the test sample to obtain a first platelet test result of the blood sample to be tested, comprises: the control device configured to:

    control the sample preparation portion to mix the portion of the blood sample to be tested and the treatment reagent to prepare the test sample; and

    control the sample detection portion to perform the test on the test sample to obtain the first platelet test result of the blood sample to be tested.

3.  The sample analysis system of claim 1 or 2, wherein the smear processing device comprises a smear preparation device and a cell image acquisition device; and

    the control device configured to control the smear processing device to prepare a sample smear to be tested from another portion of the blood sample to be tested, image the sample smear to be tested to obtain cell images of the blood sample to be tested, and analyze the cell images to obtain a second platelet test result of the blood sample to be tested, comprises: the control device configured to:

    control the smear preparation device to prepare the sample smear to be tested from the another portion of the blood sample to be tested; and

    control the cell image acquisition device to image the sample smear to be tested to obtain the cell images of the blood sample to be tested and analyze the cell images to obtain the second platelet test result of the blood sample to be tested.

4.  The sample analysis system of any one of claims 1 to 3, wherein the control device comprises a first control portion and a second control portion, the first control portion being configured to control the sample analysis device, and the second control portion being configured to control the smear processing device.

5.  The sample analysis system of any one of claims 1 to 4, wherein the platelet abnormality comprises platelet aggregation.

6.  The sample analysis system of any one of claims 1 to 5, wherein the control device configured to control the sample analysis device to mix a portion of a blood sample to be tested and a treatment reagent to prepare a test sample, and perform a test on the test sample to obtain a first platelet test result of the blood sample to be tested, comprises: the control device configured to:

    control the sample analysis device to mix the portion of the blood sample to be tested and a diluent as the treatment reagent to prepare the test sample, and perform the test on the test sample using an impedance method to obtain a first platelet count value of the blood sample to be tested as the first platelet test result; or

    control the sample analysis device to mix the portion of the blood sample to be tested and a fluorescent reagent as the treatment reagent to prepare the test sample, and perform the test on the test sample using an optical method to obtain a first platelet count value of the blood sample to be tested as the first platelet test result.

7.  The sample analysis system of any one of claims 1 to 6, wherein the control device configured to analyze the cell images to obtain a second platelet test result of the blood sample to be tested comprises: the control device configured to:

identify platelet aggregates in the cell images; and

obtain the second platelet test result based on a number and/or a size of the platelet aggregates, wherein preferably, the second platelet test result is the number of the platelet aggregates.

8. The sample analysis system of any one of claims 1 to 7, wherein the control device configured to determine whether to output prompt information indicating presence of a platelet abnormality in the blood sample to be tested, based on a combined analysis of the first platelet test result and the second platelet test result, comprises: the control device configured to:

determine a determination threshold based on the first platelet test result, and

determine to output the prompt information when the second platelet test result is greater than the determination threshold,

preferably, the first platelet test result is a platelet count value, and the second platelet test result is a number of platelet aggregates.

9. The sample analysis system of claim 8, wherein the control device configured to determine a determination threshold based on the first platelet test result comprises: the control device configured to calculate the determination threshold by using the following formula:

$$L(x) = \begin{cases} a, & x < c \\ b * x, & x \geq c \end{cases}$$

wherein L(x) is the determination threshold, x is the first platelet test result, and a, b, and c are constants.

10. A platelet abnormality detection method, comprising:

mixing a portion of a blood sample to be tested and a treatment reagent to prepare a test sample, and performing a test on the test sample to obtain a first platelet test result of the blood sample to be tested;

determining whether cell image analysis is required for the blood sample to be tested, based on the first platelet test result;

if it is determined that the cell image analysis is required for the blood sample to be tested, preparing a sample smear to be tested from another portion of the blood sample to be tested, imaging the sample smear to be tested to obtain cell images of the blood sample to be tested, and analyzing the cell images to obtain a second platelet test result of the blood sample to be tested; and

determining whether to output prompt information indicating presence of a platelet abnormality in the blood sample to be tested, based on a combined analysis of the first platelet test result and the second platelet test result, and if so, outputting the prompt information.

11. The method of claim 10, wherein the platelet abnormality comprises platelet aggregation.

12. The method of any one of claims 10 to 11, wherein mixing a portion of a blood sample to be tested and a treatment reagent to prepare a test sample, and performing a test on the test sample to obtain a first platelet test result of the blood sample to be tested, comprise:

mixing the portion of the blood sample to be tested and a diluent as the treatment reagent to prepare the test sample, and performing the test on the test sample using an impedance method to obtain a first platelet count value of the blood sample to be tested as the first platelet test result; or

mixing the portion of the blood sample to be tested and a fluorescent reagent as the treatment reagent to prepare the test sample, and performing the test on the test sample using an optical method to obtain a first platelet count value of the blood sample to be tested as the first platelet test result.

13. The method of any one of claims 10 to 12, wherein analyzing cell images to obtain a second platelet test result of the blood sample to be tested comprises:

identifying platelet aggregates in the cell images; and

obtaining the second platelet test result based on a number and/or a size of the platelet aggregates, wherein preferably, the second platelet test result is the number of the platelet aggregates.

**14.** The method of any one of claims 10 to 13, wherein determining whether to output prompt information indicating presence of a platelet abnormality in the blood sample to be tested, based on a combined analysis of the first platelet test result and the second platelet test result, comprises:

determining a determination threshold based on the first platelet test result, and
determining to output the prompt information when the second platelet test result is greater than the determination threshold,
preferably, the first platelet test result is a platelet count value, and the second platelet test result is a number of platelet aggregates.

**15.** The method of claim 14, wherein determining a determination threshold based on the first platelet test result comprises: calculating the determination threshold by using the following formula:

$$L(x) = \begin{cases} a, & x < c \\ b * x, & x \geq c \end{cases}$$

wherein L(x) is the determination threshold, x is the first platelet test result, and a, b, and c are constants.

Figure 1

Figure 2

Figure 3

Figure 4

Figure 5

Figure 6

Figure 7

Figure 8

Figure 9

Figure 10

Figure 11

Europäisches
Patentamt

European
Patent Office

Office européen
des brevets

**EUROPEAN SEARCH REPORT**

Application Number

EP 25 22 7264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 071 485 A1 (SHENZHEN MINDRAY BIOMEDICAL ELECTRONICS CO LTD [CN]) 12 October 2022 (2022-10-12) | 1-8, 10-14 | INV.<br>G01N1/28<br>G01N15/14 |
| A | * paragraph [0004]; figure 1 *<br>* paragraph [0060] - paragraph [0065] *<br>----- | 9,15 | ADD.<br>G01N35/00 |
| A | US 5 692 220 A (DIAMOND LAWRENCE W [DE] ET AL) 25 November 1997 (1997-11-25)<br>* figure 1 *<br>----- | 1-15 | |
| A | US 2022/221461 A1 (NAGAI TAKAAKI [JP] ET AL) 14 July 2022 (2022-07-14)<br>* paragraph [0018] - paragraph [0019]; figure 1 *<br>----- | 1-15 | |

**TECHNICAL FIELDS SEARCHED (IPC)**

G01N

The present search report has been drawn up for all claims

| Place of search | Date of completion of the search | Examiner |
|---|---|---|
| The Hague | 24 February 2026 | Mauritz, Jakob |

EPO FORM 1503 03.82 (P04C01)

## ANNEX TO THE EUROPEAN SEARCH REPORT
## ON EUROPEAN PATENT APPLICATION NO.

EP 25 22 7264

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | | Publication date | Patent family member(s) | | Publication date |
|---|---|---|---|---|---|
| EP 4071485 | A1 | 12-10-2022 | CN | 114729953 A | 08-07-2022 |
| | | | EP | 4071485 A1 | 12-10-2022 |
| | | | WO | 2021109152 A1 | 10-06-2021 |
| US 5692220 | A | 25-11-1997 | AU | 7645494 A | 22-03-1995 |
| | | | US | 5692220 A | 25-11-1997 |
| | | | WO | 9506909 A1 | 09-03-1995 |
| US 2022221461 | A1 | 14-07-2022 | CN | 110954708 A | 03-04-2020 |
| | | | CN | 118914578 A | 08-11-2024 |
| | | | EP | 3629029 A1 | 01-04-2020 |
| | | | EP | 4455678 A2 | 30-10-2024 |
| | | | JP | 7269692 B2 | 09-05-2023 |
| | | | JP | 7546719 B2 | 06-09-2024 |
| | | | JP | 2020051872 A | 02-04-2020 |
| | | | JP | 2023089236 A | 27-06-2023 |
| | | | US | 2020096515 A1 | 26-03-2020 |
| | | | US | 2022221461 A1 | 14-07-2022 |
| | | | US | 2024402179 A1 | 05-12-2024 |

EPO FORM P0459

For more details about this annex : see Official Journal of the European Patent Office, No. 12/82